# EUROPEAN PATENT APPLICATION

(11) **EP 4 682 979 A1**
(43) Date of publication of application: **21.01.2026**
(21) Application number: 24895503.1
(22) Date of filing: 30.05.2024
(51) Int. Cl.: H01M 4/36, H01M 4/58, H01M 4/62, H01M 4/136, H01M 10/0525

(54) **METHOD FOR PREPARING POSITIVE ELECTRODE MATERIAL, POSITIVE ELECTRODE MATERIAL, POSITIVE ELECTRODE SHEET, BATTERY AND ELECTRIC DEVICE**

(30) Priority: 01.12.2023 CN 202311644140
(71) Applicant: Jiangsu Contemporary Amperex Technology Limited, Changzhou, Jiangsu 213300 (CN); Jiangsu Lithitech Co., Ltd., Changzhou, Jiangsu 213300 (CN)
(72) Inventor: GUO, Yongnan, Changzhou, Jiangsu 213300 (CN); WANG, Caijun, Changzhou, Jiangsu 213300 (CN); LI, Houyong, Changzhou, Jiangsu 213300 (CN); ZHU, Yinjun, Changzhou, Jiangsu 213300 (CN); LI, Jiawei, Changzhou, Jiangsu 213300 (CN); LV, Jiale, Changzhou, Jiangsu 213300 (CN); PAN, Yutao, Changzhou, Jiangsu 213300 (CN); CAI, Jiecheng, Changzhou, Jiangsu 213300 (CN); SUN, Huaiyu, Changzhou, Jiangsu 213300 (CN); ZHANG, Jicheng, Changzhou, Jiangsu 213300 (CN)
(74) Representative: Lorenz Seidler Gossel Part. mbB
(86) International application number: PCT/CN2024/096459
(87) International publication number: WO 2025/112394

(57) **Abstract**

A method for preparing a positive electrode material, a positive electrode material, a positive electrode plate, a battery, and an electric apparatus are provided. The method for preparing a positive electrode material includes: mixing a precursor lithium manganese iron phosphate, a carbon source, and a source of a doping element in a solvent, drying, and sintering to obtain a positive electrode material. The positive electrode material includes a core and a coating layer coating the core; the core includes LiMnₓFe₁₋ₓPO₄, where 0 < x < 1; the coating layer includes carbon and a doping element; and the doping element includes one or more of Group IIA elements, Group IIIA elements, Group IVA elements, and transition metal elements. The method reduces the powder resistivity and specific surface area of the positive electrode material, and improves the gram capacity and cycling performance of a battery.

## Description

### CROSS-REFERENCE TO RELATED APPLICATIONS

This application claims priority to Chinese Patent Application No. 202311644140.8, filed on December 01, 2023 and entitled "METHOD FOR PREPARING POSITIVE ELECTRODE MATERIAL, POSITIVE ELECTRODE MATERIAL, POSITIVE ELECTRODE PLATE, BATTERY, AND ELECTRIC APPARATUS", which is incorporated herein by reference in its entirety.

### TECHNICAL FIELD

This application relates to the field of lithium battery technology, and in particular, to a method for preparing a positive electrode material, a positive electrode material, a positive electrode plate, a battery, and an electric apparatus.

### BACKGROUND

In recent years, with increasingly wide use of secondary batteries, secondary batteries have been widely used in energy storage power supply systems such as hydroelectric, thermal, wind, and solar power plants, and many other fields including electric tools, electric bicycles, electric motorcycles, electric vehicles, military equipment, and aerospace. Due to the great development of secondary batteries, higher requirements are imposed on the electrochemical performance and the like of the batteries.

### SUMMARY

This application is made in view of the above issues, with an objective to provide a method for preparing a positive electrode material, a positive electrode material, a positive electrode plate, a battery, and an electric apparatus. The method of this application reduces the powder resistivity and specific surface area of the positive electrode material, increases the gram capacity of the positive electrode material, and improves the cycling performance of a battery.

To achieve the above objective, a first aspect of this application provides a method for preparing a positive electrode material, including:
mixing a precursor lithium manganese iron phosphate, a carbon source, and a source of a doping element in a solvent, drying, and sintering to obtain a positive electrode material; where
the positive electrode material includes a core and a coating layer coating the core; the core includes LiMnₓFe₁₋ₓPO₄, where 0 < x < 1; the coating layer includes carbon and a doping element; and the doping element includes one or more of Group IIA elements, Group IIIA elements, Group IVA elements, and transition metal elements.

Thus, in this application, simultaneously adding the carbon source and the source of the doping element during the coating process, facilitates the formation of a tight structure between the coating layer and the core surface, stabilizes crystals of the positive electrode material, reduces the powder resistivity of the positive electrode material, appropriately reduces the specific surface area of the positive electrode material, and improves the gram capacity and cycling performance of a battery.

In any embodiment, 0.1 ≤ x ≤ 0.9; and/or
the doping element includes one or more elements of Mg, Ti, V, Si, Cr, Mn, Fe, Co, Ni, and B.

In any embodiment, a molar ratio of the precursor to a carbon element in the carbon source is 1:1.5 to 1:0.001, optionally 1:1.45 to 1:0.01; and/or
a molar ratio of the precursor to a doping element in the source of the doping element is 1:0.25 to 1:0.00001, optionally 1:0.2 to 1:0.0001.

The molar ratio of the precursor to the carbon element in the carbon source falling within the above range facilitates the formation of an appropriate coating layer thickness, helping improve the gram capacity and cycling performance of the battery.

The molar ratio of the precursor to the doping element falling within the above range facilitates the presence of the doping element between the core and the carbon element and within the coating layer, thereby improving the gram capacity and cycling performance of the battery.

In any embodiment, the mixing is performed at 5°C to 70°C, and optionally, the mixing is performed at 10°C to 60°C; and/or
a mixing duration is 0.5 hours to 12 hours; and/or
the mixing is performed by grinding.

Thus, adopting the above mixing temperature and duration facilitates the uniform distribution of the doping element within the coating layer and at the boundary between the core and the coating layer, and also facilitates the uniform distribution of the carbon element within the coating layer, thereby improving the gram capacity and cycling performance of the battery.

In any embodiment, a sintering temperature is 350°C to 950°C, optionally 400°C to 900°C; and/or
a sintering duration is 2 hours to 20 hours; and/or
the sintering is performed in an inert atmosphere.

Thus, adopting the above sintering temperature and sintering duration during the preparation of the positive electrode material facilitates a more complete reaction, forming a tight structure between the coating layer and the core surface, thereby improving the gram capacity and cycling performance of the battery.

In any embodiment, a drying temperature is 150°C to 400°C; and/or
the drying is performed by spray drying or oven drying; and/or
the method further includes sieving a mixture before the drying and collecting a sieved portion; and/or
the method further includes crushing after the sintering, optionally followed by sieving; and/or
the carbon source includes one or more of an organic carbon source and an inorganic carbon source, optionally including one or more of citric acid, glucose, sucrose, polyvinyl alcohol, polypyrrole, polyethylene glycol, asphalt, anthracene, and aniline; and/or
the source of the doping element includes one or more of a hydroxide of the doping element, an oxide of the doping element, an acid of the doping element, and a salt of the doping element; and/or
the solvent includes one or more of water and an organic solvent, and optionally, the solvent includes one or more of water, ethanol, methanol, acetone, ethylene glycol, and isopropanol.

In any embodiment, the precursor is prepared by the following steps:
reacting a lithium source, a manganese source, an iron source, and a phosphorus source in a solvent, performing solid-liquid separation, and collecting a solid-phase material; and
drying and sintering the solid-phase material to obtain the precursor.

In any embodiment, the precursor includes LiMnₓFe₁₋ₓPO₄, where 0 < x < 1, optionally 0.1 ≤ x ≤ 0.9.

Optionally, in the steps of preparing the precursor, a molar ratio of a lithium element in the lithium source, a manganese element in the manganese source, an iron element in the iron source, and a phosphorus element in the phosphorus source is 1:x:(1-x):1.

The precursor of this application has a uniform distribution of elements and good batch consistency, and the positive electrode material prepared using the precursor material of this application has a uniform distribution of elements and good batch consistency, thereby improving the electrical properties such as gram capacity and cycling performance of a prepared battery.

In any embodiment, in the steps of preparing the precursor, the reaction is performed at 5°C to 60°C, and optionally, the reaction is performed at 10°C to 50°C; and/or
a reaction duration is 10 minutes to 8 hours, optionally 10 minutes to 6 hours; and/or
a drying temperature is 50°C to 250°C; and/or
a drying duration is 10 minutes to 12 hours; and/or
a sintering temperature is 150°C to 800°C, optionally 200°C to 700°C; and/or
a sintering duration is 1 hour to 12 hours; and/or
the sintering is performed in an inert atmosphere.

Adopting the above reaction temperature and duration during the preparation of the precursor helps reduce side reactions, obtaining a precursor material with uniform composition and good batch consistency, thereby improving the gram capacity and cycling performance of the battery.

Adopting the above sintering temperature and duration during the preparation of the precursor facilitates the growth of crystalline materials, reducing the proportion of amorphous particles, and obtaining a precursor with good crystallinity, thereby improving the gram capacity and cycling performance of the battery.

In any embodiment, in the steps of preparing the precursor, the solid-liquid separation is performed by filtration or centrifugation; and/or
before the drying, the solid-phase material is ball-milled; and optionally, a ball-milling rotation speed is 100 rpm to 600 rpm, optionally 200 rpm to 500 rpm; and a ball-milling duration is 1 hour to 12 hours, optionally 2 hours to 10 hours; and/or
before the drying, the solid-phase material is washed; and/or
between the drying and the sintering, the solid-phase material is crushed; and/or
the lithium source includes one or more of a hydroxide, oxide, inorganic acid salt, and organic acid salt of a lithium element, optionally including one or more of lithium hydroxide, lithium oxide, lithium carbonate, lithium acetate, lithium oxalate, lithium phosphate, and lithium chloride; and/or
the manganese source includes one or more of an organic acid salt, inorganic acid salt, oxide, and hydroxide of a manganese element; and/or
the iron source includes one or more of an organic acid salt, inorganic acid salt, oxide, and hydroxide of an iron element; and/or
the phosphorus source includes one or more of phosphoric acid, phosphate, hydrogen phosphate, and dihydrogen phosphate, optionally including one or more of phosphoric acid, iron phosphate, ferrous phosphate, ammonium ferrous phosphate, ammonium dihydrogen phosphate, ammonium hydrogen phosphate, ammonium phosphate, lithium hydrogen phosphate, lithium dihydrogen phosphate, and lithium phosphate; and/or
a carbon source is added during the reaction process.

Adopting the above ball-milling rotation speed and duration during the preparation of the precursor helps improve the degree of solid-solid reaction, making the reaction more complete, thereby improving the gram capacity and cycling performance of the battery.

A second aspect of this application provides a positive electrode material including a core and a coating layer coating the core, where the core includes LiMnₓFe₁₋ₓPO₄, where 0 < x < 1, optionally 0.1 ≤ x ≤ 0.9; the coating layer includes carbon and a doping element; the doping element includes one or more of Group IIA elements, Group IIIA elements, Group IVA elements, and transition metal elements, optionally including one or more elements of Mg, Ti, V, Si, Cr, Mn, Fe, Co, Ni, and B.

Optionally, a molar ratio of a manganese element to iron element in the core is 1:9 to 9:1.

Thus, in this application, simultaneously adding a carbon source and a source of a doping element during the coating process facilitates the formation of a tight structure between the coating layer and the core surface, stabilizes crystals of the positive electrode material, reduces the powder resistivity of the positive electrode material, appropriately reduces the specific surface area of the positive electrode material, and improves the gram capacity and cycling performance of a battery.

In any embodiment, a molar ratio of LiMnₓFe₁₋ₓPO₄ in the core to a carbon element in the coating layer is 1:1.5 to 1:0.001, optionally 1:1.45 to 1:0.01; and/or
a molar ratio of LiMnₓFe₁₋ₓPO₄ in the core to the doping element in the coating layer is 1:0.25 to 1:0.00001, optionally 1:0.2 to 1:0.0001.

In any embodiment, a particle size Dᵥ50 of the positive electrode material is 0.1 µm to 13 µm; and/or
a BET specific surface area of the positive electrode material is 10 m²/g to 27 m²/g, optionally 10 m²/g to 25 m²/g; and/or
a powder resistivity of the positive electrode material is less than or equal to 1200 Ω·cm, and optionally, the powder resistivity of the positive electrode material is less than or equal to 300 Ω·cm; and/or
the positive electrode material is prepared by the method according to the first aspect of this application.

A third aspect of this application provides a positive electrode plate including a positive electrode material prepared by the method according to the first aspect of this application or the positive electrode material according to the second aspect of this application.

A fourth aspect of this application provides a battery including a positive electrode material prepared by the method according to the first aspect of this application, the positive electrode material according to the second aspect of this application, or the positive electrode plate according to the third aspect of this application.

A fifth aspect of this application provides an electric apparatus including the battery according to the fourth aspect of this application.

### BRIEF DESCRIPTION OF DRAWINGS

FIG. 1 is a schematic diagram of a battery cell according to an embodiment of this application.
FIG. 2 is an exploded view of the battery cell according to the embodiment of this application shown in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application shown in FIG. 4.
FIG. 6 is a schematic diagram of an electric apparatus using a battery cell as a power source according to an embodiment of this application.
FIG. 7 is a TEM image of a positive electrode material of Example 1 of this application.
FIG. 8 is a TEM image of a positive electrode material of Comparative Example 3 of this application.

### Description of reference signs:

1. battery pack; 2. upper box body; 3. lower box body; 4. battery module; 5. battery cell; 51. housing; 52. electrode assembly; and 53. top cover assembly.

### DESCRIPTION OF EMBODIMENTS

Embodiments that specifically disclose a negative electrode active material and a preparation method thereof, a positive electrode plate, a negative electrode plate, a battery cell, a battery module, a battery pack, and an electric apparatus in this application are described in detail with reference to the accompanying drawings as appropriate. However, there may be cases where unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that particular range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise specified, a value range of "a-b" is a short representation of any combination of real numbers between a and b, where both a and b are real numbers. For example, a value range of "0-5" means that all real numbers in the range of "0-5" are listed herein, and "0-5" is just an abbreviated representation of a combination of these numbers. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all embodiments and optional embodiments of this application may be combined with each other to form new technical solutions.

Unless otherwise specified, all technical features and optional technical features of this application may be combined with each other to form new technical solutions.

Unless otherwise specified, all steps of this application may be performed sequentially or randomly, preferably sequentially. For example, a method including steps (a) and (b) indicates that the method may include steps (a) and (b) performed sequentially, or steps (b) and (a) performed sequentially. For example, the above-mentioned method may further include step (c), which indicates that step (c) may be added to the method in any ordinal position, for example, the method may include steps (a), (b), and (c), steps (a), (c), and (b), steps (c), (a), and (b), or the like.

Unless otherwise specified, a particle size Dᵥ50 in this application refers to a particle size when a cumulative volume distribution percentage of particles reaches 50%.

### [Battery cell]

A battery cell, also known as a rechargeable battery or a storage battery, refers to a battery whose active material can be activated for continuous use through charging after the battery is discharged.

Typically, a battery cell includes a positive electrode plate, a negative electrode plate, a separator, and an electrolyte. During charging and discharging of the battery, active ions (for example, lithium ions) are intercalated and deintercalated back and forth between the positive electrode plate and the negative electrode plate. The separator is disposed between the positive electrode plate and the negative electrode plate to mainly prevent short circuits between positive and negative electrodes and to allow the active ions to pass through. The electrolyte is located between the positive electrode plate and the negative electrode plate to mainly conduct active ions.

### [Method for preparing positive electrode material]

An embodiment of this application provides a method for preparing a positive electrode material, including:
mixing a precursor lithium manganese iron phosphate, a carbon source, and a source of a doping element in a solvent, drying, and sintering to obtain a positive electrode material; where
the positive electrode material includes a core and a coating layer coating the core; the core includes LiMnₓFe₁₋ₓPO₄, where 0 < x < 1, for example, 0.1, 0.2, 0.3, 0.4, 0.5, 0.6, 0.7, 0.8, 0.9, 1, or a range defined by any of these values; the coating layer includes carbon and a doping element; and the doping element includes one or more of Group IIA elements, Group IIIA elements, Group IVA elements, and transition metal elements.

A lithium manganese iron phosphate material has poor conductivity, and its structure has an insulator with a 0.2 eV spin-exchange bandgap and a semiconductor with a 0.3 eV crystal field bandgap. Although conventional carbon coating can address the issue of high powder resistivity in the lithium manganese iron phosphate material, the electrochemical performance of batteries made from the material still cannot be improved.

Although the mechanism is not yet clear, the applicant unexpectedly found that in this application, simultaneously adding the carbon source and the source of the doping element during the coating process facilitates the formation of a tight structure between the coating layer and the core surface, stabilizes crystals of the positive electrode material, reduces the powder resistivity of the positive electrode material, appropriately reduces the specific surface area of the positive electrode material, and improves the gram capacity and cycling performance of a battery.

In some embodiments, 0.1 ≤ x ≤ 0.9; and/or
the doping element includes one or more elements of Mg, Ti, V, Si, Cr, Mn, Fe, Co, Ni, and B.

In some embodiments, a molar ratio of the precursor to a carbon element in the carbon source is 1:1.5 to 1:0.001, optionally 1:1.45 to 1:0.01, for example, 1:1.5, 1:1.45, 1:1.4, 1:1.35, 1:1.3, 1:1.25, 1:1.2, 1:1.15, 1:1.1, 1:1.05, 1:1, 1:0.95, 1:0.9, 1:0.8, 1:0.7, 1:0.6, 1:0.5, 1:0.4, 1:0.3, 1:0.2, 1:0.1, 1:0.09, 1:0.07, 1:0.06, 1:0.05, 1:0.04, 1:0.03, 1:0.02, 1:0.01, 1:0.009, 1:0.007, 1:0.005, 1:0.003, 1:0.002, 1:0.001, or a range defined by any of these values; and/or
a molar ratio of the precursor to a doping element in the source of the doping element is 1:0.25 to 1:0.00001, optionally 1:0.2 to 1:0.0001, for example, 1:0.25, 1:0.2, 1:0.15, 1:0.1, 1:0.05, 1:0.01, 1:0.009, 1:0.007, 1:0.005, 1:0.003, 1:0.001, 1:0.0009, 1:0.0007, 1:0.0005, 1:0.0003, 1:0.0002, 1:0.0001, 1:0.00009, 1:0.00007, 1:0.00005, 1:0.00003, 1:0.00002, 1:0.00001, or a range defined by any of these values.

The molar ratio of the precursor to the carbon element in the carbon source falling within the above range facilitates the formation of an appropriate coating layer thickness, helping improve the gram capacity and cycling performance of the battery.

The molar ratio of the precursor to the doping element falling within the above range facilitates the presence of the doping element between the core and the carbon element and within the coating layer, thereby improving the gram capacity and cycling performance of the battery.

In some embodiments, the mixing is performed at 5°C to 70°C, and optionally, the mixing is performed at 10°C to 60°C. For example, the mixing is performed at 5°C, 10°C, 15°C, 20°C, 25°C, 30°C, 35°C, 40°C, 45°C, 50°C, 55°C, 60°C, 65°C, 70°C, or a range defined by any of these values; and/or
a mixing duration is 0.5 hours to 12 hours, for example, 0.5 hours, 1 hour, 2.5 hours, 3 hours, 4 hours, 5 hours, 6 hours, 7 hours, 8 hours, 9 hours, 9.5 hours, 10 hours, 10.5 hours, 11 hours, 11.5 hours, 12 hours, or a range defined by any of these values; and/or
the mixing is performed by grinding.

Thus, adopting the above mixing temperature and duration facilitates the uniform distribution of the doping element within the coating layer and at the boundary between the core and the coating layer, and also facilitates the uniform distribution of the carbon element within the coating layer, thereby improving the gram capacity and cycling performance of the battery.

In some embodiments, a sintering temperature is 350°C to 950°C, optionally 400°C to 900°C, for example, 350°C, 400°C, 450°C, 500°C, 550°C, 600°C, 650°C, 700°C, 750°C, 800°C, 850°C, 900°C, 950°C, or a range defined by any of these values; and/or
a sintering duration is 2 hours to 20 hours, for example, 2 hours, 3 hours, 5 hours, 6 hours, 7 hours, 8 hours, 9 hours, 10 hours, 11 hours, 12 hours, 14 hours, 15 hours, 16 hours, 17 hours, 18 hours, 19 hours, 20 hours, or a range defined by any of these values; and/or
the sintering is performed in an inert atmosphere.

Thus, adopting the above sintering temperature and sintering duration during the preparation of the positive electrode material facilitates a more complete reaction, forming a tight structure between the coating layer and the core surface, thereby improving the gram capacity and cycling performance of the battery.

In some embodiments, a drying temperature is 150°C to 400°C, for example, 150°C, 180°C, 200°C, 220°C, 250°C, 270°C, 300°C, 330°C, 350°C, 380°C, 400°C, or a range defined by any of these values; and/or
the drying is performed by spray drying or oven drying; and/or
the method further includes sieving a mixture before the drying and collecting a sieved portion; and/or
the method further includes crushing after the sintering, optionally followed by sieving; and/or
the carbon source includes one or more of an organic carbon source and an inorganic carbon source, optionally including one or more of citric acid, glucose, sucrose, polyvinyl alcohol, polypyrrole, polyethylene glycol, asphalt, anthracene, and aniline; and/or
the source of the doping element includes one or more of a hydroxide of the doping element, an oxide of the doping element, an acid of the doping element, and a salt of the doping element; and/or
the solvent includes one or more of water and an organic solvent, and optionally, the solvent includes one or more of water, ethanol, methanol, acetone, ethylene glycol, and isopropanol.

In some embodiments, the precursor is prepared by the following steps:
reacting a lithium source, a manganese source, an iron source, and a phosphorus source in a solvent, performing solid-liquid separation, and collecting a solid-phase material; and
drying and sintering the solid-phase material to obtain the precursor.

In some embodiments, the precursor includes LiMnₓFe₁₋ₓPO₄, where 0 < x < 1, optionally 0.1 ≤ x ≤ 0.9. For example, x is 0.1, 0.2, 0.3, 0.4, 0.5, 0.6, 0.7, 0.8, 0.9, 1, or a range defined by any of these values.

Optionally, in the steps of preparing the precursor, a molar ratio of a lithium element in the lithium source, a manganese element in the manganese source, an iron element in the iron source, and a phosphorus element in the phosphorus source is 1:x:(1-x):1.

The precursor of this application has a uniform distribution of elements and good batch consistency, and the positive electrode material prepared using the precursor material of this application has a uniform distribution of elements and good batch consistency, thereby improving the electrical properties such as gram capacity and cycling performance of a prepared battery.

In some embodiments, in the steps of preparing the precursor, the reaction is performed at 5°C to 60°C, and optionally, the reaction is performed at 10°C to 50°C; and for example, the reaction is performed at 5°C, 10°C, 15°C, 20°C, 25°C, 30°C, 35°C, 40°C, 45°C, 50°C, 55°C, 60°C, or a range defined by any of these values; and/or
a reaction duration is 10 minutes to 8 hours, optionally 10 minutes to 6 hours, for example, 10 minutes, 20 minutes, 30 minutes, 50 minutes, 60 minutes, 1.5 hours, 2 hours, 3 hours, 3.5 hours, 4 hours, 4.5 hours, 5 hours, 5.5 hours, 6 hours, 6.5 hours, 7 hours, 7.5 hours, 8 hours, or a range defined by any of these values; and/or
a drying temperature is 50°C to 250°C, for example, 60°C, 70°C, 80°C, 90°C, 100°C, 120°C, 140°C, 150°C, 160°C, 180°C, 200°C, 220°C, 230°C, 240°C, 250°C, or a range defined by any of these values; and/or
a drying duration is 10 minutes to 12 hours, for example, 10 minutes, 20 minutes, 30 minutes, 50 minutes, 60 minutes, 1.5 hours, 2 hours, 3 hours, 3.5 hours, 4 hours, 4.5 hours, 5 hours, 5.5 hours, 6 hours, 6.5 hours, 7 hours, 7.5 hours, 8 hours, 9 hours, 10 hours, 11 hours, 12 hours, or a range defined by any of these values; and/or
a sintering temperature is 150°C to 800°C, optionally 200°C to 700°C, for example, 150°C, 200°C, 250°C, 300°C, 350°C, 400°C, 450°C, 500°C, 550°C, 600°C, 650°C, 700°C, 750°C, 800°C; and/or
a sintering duration is 1 hour to 12 hours, for example, 1 hour, 2 hours, 3 hours, 4 hours, 5 hours, 6 hours, 7 hours, 8 hours, 9 hours, 10 hours, 11 hours, 12 hours, or a range defined by any of these values; and/or
the sintering is performed in an inert atmosphere.

Adopting the above reaction temperature and duration during the preparation of the precursor helps reduce side reactions, obtaining a precursor material with uniform composition and good batch consistency, thereby improving the gram capacity and cycling performance of the battery.

Adopting the above sintering temperature and duration during the preparation of the precursor facilitates the growth of crystalline materials, reducing the proportion of amorphous particles, and obtaining a precursor with good crystallinity, thereby improving the gram capacity and cycling performance of the battery.

In some embodiments, in the steps of preparing the precursor, the solid-liquid separation is performed by filtration or centrifugation; and/or
before the drying, the solid-phase material is ball-milled; and optionally, a ball-milling rotation speed is 100 rpm to 600 rpm, optionally 200 rpm to 500 rpm, for example, 100 rpm, 200 rpm, 300 rpm, 400 rpm, 500 rpm, 600 rpm, or a range defined by any of these values, and a ball-milling duration is 1 hour to 12 hours, optionally 2 hours to 10 hours, for example, 1 hour, 2 hours, 3 hours, 4 hours, 5 hours, 6 hours, 7 hours, 8 hours, 9 hours, 10 hours, 11 hours, 12 hours, or a range defined by any of these values; and/or
before the drying, the solid-phase material is washed; and/or
between the drying and the sintering, the solid-phase material is crushed; and/or
the lithium source includes one or more of a hydroxide, oxide, inorganic acid salt, and organic acid salt of a lithium element, optionally including one or more of lithium hydroxide, lithium oxide, lithium carbonate, lithium acetate, lithium oxalate, lithium phosphate, and lithium chloride; and/or
the manganese source includes one or more of an organic acid salt, inorganic acid salt, oxide, and hydroxide of a manganese element; and/or
the iron source includes one or more of an organic acid salt, inorganic acid salt, oxide, and hydroxide of an iron element; and/or
the phosphorus source includes one or more of phosphoric acid, phosphate, hydrogen phosphate, and dihydrogen phosphate, optionally including one or more of phosphoric acid, iron phosphate, ferrous phosphate, ammonium ferrous phosphate, ammonium dihydrogen phosphate, ammonium hydrogen phosphate, ammonium phosphate, lithium hydrogen phosphate, lithium dihydrogen phosphate, and lithium phosphate; and/or
a carbon source is added during the reaction process.

Adopting the above ball-milling rotation speed and duration during the preparation of the precursor helps improve the degree of solid-solid reaction, making the reaction more complete, thereby improving the gram capacity and cycling performance of the battery.

### [Positive electrode material]

An embodiment of this application provides a positive electrode material including a core and a coating layer coating the core, where the core includes LiMnₓFe₁₋ₓPO₄, where 0 < x < 1, optionally 0.1 ≤ x ≤ 0.9, for example, 0.1, 0.2, 0.3, 0.4, 0.5, 0.6, 0.7, 0.8, 0.9, 1, or a range defined by any of these values; the coating layer includes carbon and a doping element; and the doping element includes one or more of Group IIA elements, Group IIIA elements, Group IVA elements, and transition metal elements, optionally including one or more elements of Mg, Ti, V, Si, Cr, Mn, Fe, Co, Ni, and B.

Optionally, a molar ratio of a manganese element to iron element in the core is 1:9 to 9:1, for example, 1:8, 1:7.5, 1:7, 1:6.5, 1:6, 1:5.5, 1:5, 1:4.5, 1:4, 1:3.5, 1:3, 1:2.5, 1:2, 1:1.5, 1:1, 1.5:1, 2:1, 2.5:1, 3:1, 3.5:1, 4:1, 4.5:1, 5:1, 5.5:1, 6:1, 6.5:1, 7:1, 7.5:1, 8:1, 8.5:1, 9:1, or a range defined by any of these values.

Thus, in this application, simultaneously adding a carbon source and a source of a doping element during the coating process facilitates the formation of a tight structure between the coating layer and the core surface, stabilizes crystals of the positive electrode material, reduces the powder resistivity of the positive electrode material, appropriately reduces the specific surface area of the positive electrode material, and improves the gram capacity and cycling performance of a battery.

In some embodiments, a molar ratio of LiMnₓFe₁₋ₓPO₄ in the core to a carbon element in the coating layer is 1:1.5 to 1:0.001, optionally 1:1.45 to 1:0.01, for example, 1:1.5, 1:1.45, 1:1.4, 1:1.35, 1:1.3, 1:1.25, 1:1.2, 1:1.15, 1:1.1, 1:1.05, 1:1, 1:0.95, 1:0.9, 1:0.8, 1:0.7, 1:0.6, 1:0.5, 1:0.4, 1:0.3, 1:0.2, 1:0.1, 1:0.09, 1:0.07, 1:0.06, 1:0.05, 1:0.04, 1:0.03, 1:0.02, 1:0.01, 1:0.009, 1:0.007, 1:0.005, 1:0.003, 1:0.002, 1:0.001, or a range defined by any of these values; and/or
a molar ratio of LiMnₓFe₁₋ₓPO₄ in the core to the doping element in the coating layer is 1:0.25 to 1:0.00001, optionally 1:0.2 to 1:0.0001, for example, 1:0.25, 1:0.2, 1:0.15, 1:0.1, 1:0.05, 1:0.01, 1:0.009, 1:0.007, 1:0.005, 1:0.003, 1:0.001, 1:0.0009, 1:0.0007, 1:0.0005, 1:0.0003, 1:0.0002, 1:0.0001, 1:0.00009, 1:0.00007, 1:0.00005, 1:0.00003, 1:0.00002, 1:0.00001, or a range defined by any of these values.

In some embodiments, a particle size Dᵥ50 of the positive electrode material is 0.1 µm to 13 µm, for example, 0.1 µm, 1 µm, 2 µm, 3 µm, 5 µm, 7 µm, 8 µm, 9 µm, 10 µm, 11 µm, 12 µm, 13 µm, or a range defined by any of these values; and/or
a BET specific surface area of the positive electrode material is 10 m²/g to 27 m²/g, optionally 10 m²/g to 25 m²/g, for example, 10 m²/g, 11 m²/g, 12 m²/g, 13 m²/g, 14 m²/g, 15 m²/g, 16 m²/g, 17 m²/g, 18 m²/g, 19 m²/g, 20 m²/g, 21 m²/g, 22 m²/g, 23 m²/g, 24 m²/g, 25 m²/g, 26 m²/g, 27 m²/g, or a range defined by any of these values; and/or
a powder resistivity of the positive electrode material is less than or equal to 1200 Ω·cm, optionally, a powder resistivity of the positive electrode material is less than or equal to 300 Ω·cm, for example, 10 Ω·cm, 15 Ω·cm, 20 Ω·cm, 30 Ω·cm, 40 Ω·cm, 50 Ω·cm, 60 Ω·cm, 70 Ω·cm, 80 Ω·cm, 100 Ω·cm, 120 Ω·cm, 130 Ω·cm, 150 Ω·cm, 170 Ω·cm, 180 Ω·cm, 200 Ω·cm, 220 Ω·cm, 250 Ω·cm, 280 Ω·cm, 300 Ω·cm, 350 Ω·cm, 400 Ω·cm, 500 Ω·cm, 600 Ω·cm, 700 Ω·cm, 800 Ω·cm, 850 Ω·cm, 900 Ω·cm, 1000 Ω·cm, 1100 Ω·cm, 1200 Ω·cm, or a range defined by any of these values; and/or
the positive electrode material is prepared by the method described above.

In this application, a particle size Dᵥ50 is tested using conventional methods in the art. For example, a sample is added to water to fully disperse the sample, and a laser particle size analyzer is used to test the particle size Dᵥ50 of the material.

In this application, the BET specific surface area is a BET specific surface area at - 200°C and is tested using conventional methods in the art. For example, a sample is weighed and placed in a specific surface area test tube, a liquid nitrogen cup is filled with liquid nitrogen, the specific surface area test tube is placed in the liquid nitrogen cup to maintain the sample at -200°C, and a specific surface area analyzer is used for testing.

In this application, the powder resistivity is a powder resistivity at 7.85 MPa and is tested using conventional methods in the art. For example, a sample is placed in a mold, the mold is placed in a four-probe resistivity tester, the pressure is adjusted to 7.85 MPa, a forward resistivity and reverse resistivity of the sample are tested respectively after the height and pressure of the mold are stable, and an average of the two is taken as the powder resistivity of the sample.

### [Positive electrode plate]

The positive electrode plate typically includes a positive electrode current collector and a positive electrode film layer disposed on at least one surface of the positive electrode current collector, where the positive electrode film layer includes the positive electrode material described above.

During charging and discharging of a battery, deintercalation and consumption of Li occur, and the molar content of Li in the battery varies at different states of discharge. In the enumeration of the positive electrode material in this application, the molar content of Li is an initial state of the material, that is, a state before feeding. The molar content of Li varies after the positive electrode material is applied to a battery system and undergoes charge and discharge cycles.

In the enumeration of the positive electrode material in this application, the molar content of O is only a theoretical state value, and lattice oxygen release causes the molar content of oxygen to vary, resulting in fluctuations in the actual molar content of O.

For example, the positive electrode current collector has two opposite surfaces in its thickness direction, and the positive electrode film layer is disposed on either or both of the two opposite surfaces of the positive electrode current collector.

In some embodiments, the positive electrode current collector may be a metal foil or a composite current collector. For example, as a metal foil, an aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, or silver alloy) on a polymer material substrate (for example, a substrate of polypropylene (PP), polyethylene terephthalate (PET), polybutylene terephthalate (PBT), polystyrene (PS), or polyethylene (PE)).

In some embodiments, the positive electrode material may further include positive electrode materials known in the art for batteries. For example, the positive electrode material may include at least one of the following materials: lithium transition metal oxides and their modified compounds. However, this application is not limited to these materials, and other conventional materials that can be used as positive electrode active materials for batteries may also be used. These positive electrode active materials may be used alone or in combination of two or more. Examples of the lithium transition metal oxides may include but are not limited to at least one of lithium cobalt oxide (for example, LiCoO₂), lithium nickel oxide (for example, LiNiO₂), lithium manganese oxide (for example, LiMnO₂ or LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (also referred to as NCM333), LiNi_{0.5}Co_{0.2}Mn_{0.3}O₂ (also referred to as NCM523), LiNi_{0.5}Co_{0.25}Mn_{0.25}O₂ (also referred to as NCM211), LiNi_{0.6}Co_{0.2}Mn_{0.2}O₂ (also referred to as NCM622), LiNi_{0.8}Co_{0.1}Mn_{0.1}O₂ (also referred to as NCM811)), lithium nickel cobalt aluminum oxide (for example, LiNi_{0.85}Co_{0.15}Al_{0.05}O₂), and their modified compounds.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared by the following method: the components for preparing the positive electrode plate, such as the positive electrode active material, the conductive agent, the binder, and any other components, are dispersed in a solvent (for example, N-methylpyrrolidone) to form a positive electrode slurry; and the positive electrode slurry is applied on the positive electrode current collector, followed by processes such as drying and cold pressing, to obtain the positive electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector has two opposite surfaces in its thickness direction, and the negative electrode film layer is disposed on either or both of the two opposite surfaces of the negative electrode current collector.

In some embodiments, the negative electrode current collector may be a metal foil or a composite current collector. For example, as a metal foil, a copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the negative electrode active material may be a negative electrode active material known in the art for batteries. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, a silicon-oxygen compound, a silicon-carbon composite, a silicon-nitrogen composite, and silicon alloy. The tin-based material may be selected from at least one of elemental tin, a tin-oxygen compound, and tin alloy. However, this application is not limited to these materials, and other conventional materials that can be used as negative electrode active materials for batteries may also be used. These negative electrode active materials may be used alone or in combination of two or more.

In some embodiments, the negative electrode film layer further optionally includes a binder. For example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. For example, the conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other additives, such as a thickener (for example, sodium carboxymethyl cellulose (CMC-Na)).

In some embodiments, the negative electrode plate may be prepared by the following method: the components for preparing the negative electrode plate, such as the negative electrode active material, the conductive agent, the binder, and any other components, are dispersed in a solvent (for example, deionized water) to form a negative electrode slurry; and the negative electrode slurry is applied on the negative electrode current collector, followed by processes such as drying and cold pressing, to obtain the negative electrode plate.

### [Electrolyte]

An electrolyte conducts ions between the positive electrode plate and the negative electrode plate. This application does not specifically limit the type of the electrolyte. The electrolyte can be selected based on needs. For example, the electrolyte may be in a liquid state, a gel state, or an all-solid state.

In some embodiments, the electrolyte is in a liquid state and includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bis(oxalato))phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte further optionally includes an additive. For example, the additive may include a negative electrode film-forming additive and a positive electrode film-forming additive, and may further include an additive that can improve some performance of the battery, for example, an additive for improving overcharge performance of the battery and an additive for improving high-temperature performance or low-temperature performance of the battery.

### [Separator]

In some embodiments, the battery cell further includes a separator. This application does not particularly limit the type of the separator, and the separator may be any well-known porous separator with good chemical stability and mechanical stability.

In some embodiments, the material of the separator may be selected from at least one of glass fiber, non-woven fabric, polyethylene, polypropylene, and polyvinylidene fluoride. The separator may be a single-layer film or a multilayer composite film, without particular limitation. When the separator is a multilayer composite film, the materials of the layers may be the same or different, without particular limitation.

In some embodiments, the positive electrode plate, the negative electrode plate, and the separator may be made into an electrode assembly through a winding process or a stacking process.

In some embodiments, the battery cell may include an outer package. The outer package may be used to encapsulate the electrode assembly and electrolyte described above.

In some embodiments, the outer package of the battery cell may be a hard shell, for example, a hard plastic shell, an aluminum shell, or a steel shell. The outer package of the battery cell may alternatively be a soft pack, for example, a soft pouch. The material of the soft pack may be plastic. As the plastic, polypropylene, polybutylene terephthalate, polybutylene succinate, and the like may be listed.

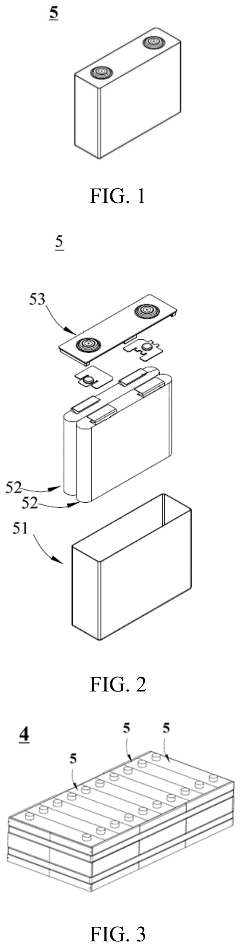

This application does not particularly limit the shape of the battery cell. The battery cell may be cylindrical, rectangular, or of any other shapes. For example, FIG. 1 shows a battery cell 5 with a rectangular structure as an example.

In some embodiments, referring to FIG. 2, the outer package may include a housing 51 and a cover plate 53. The housing 51 may include a bottom plate and side plates connected to the bottom plate, with the bottom plate and side plates enclosing to form an accommodating cavity. The housing 51 has an opening communicating with the accommodating cavity, and the cover plate 53 can cover the opening to seal the accommodating cavity. The positive electrode plate, the negative electrode plate, and the separator may be made into an electrode assembly 52 through a winding process or a stacking process. The electrode assembly 52 is encapsulated in the accommodating cavity. The electrolyte infiltrates the electrode assembly 52. The battery cell 5 may include one or more electrode assemblies 52, and persons skilled in the art may select based on specific actual needs.

In some embodiments, the battery cell may be assembled into a battery module, and the battery module may include one or more battery cells. The specific quantity may be chosen by persons skilled in the art according to the application and capacity of the battery module.

FIG. 3 shows a battery module 4 as an example. Referring to FIG. 3, in the battery module 4, multiple battery cells 5 may be arranged sequentially along a length direction of the battery module 4. Certainly, the battery cells may alternatively be arranged in any other manners. Further, the multiple battery cells 5 may be fixed by fasteners.

Optionally, the battery module 4 may further include an enclosure with an accommodating space, and the multiple battery cells 5 are accommodated in the accommodating space.

In some embodiments, the battery module may be further assembled into a battery pack, and the battery pack may include one or more battery modules. The specific quantity may be chosen by persons skilled in the art according to the application and capacity of the battery pack.

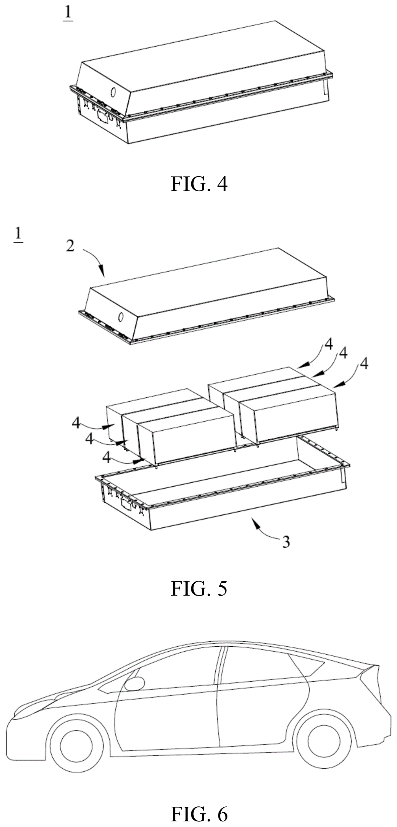

FIG. 4 and FIG. 5 show a battery pack 1 as an example. Referring to FIG. 4 and FIG. 5, the battery pack 1 may include a battery box and multiple battery modules 4 disposed in the battery box. The battery box includes an upper box body 2 and a lower box body 3, where the upper box body 2 can fit the lower box body 3 to form a closed space for accommodating the battery modules 4. The multiple battery modules 4 may be arranged in the battery box in any manner.

In addition, this application further provides an electric apparatus. The electric apparatus includes at least one of the battery cell, battery module, or battery pack provided by this application. The battery cell, the battery module, or the battery pack may be used as a power source for the electric apparatus or as an energy storage unit for the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

As an electric apparatus, a battery cell, a battery module, or a battery pack may be selected based on requirements for using the electric apparatus.

FIG. 6 shows an electric apparatus as an example. The electric apparatus is a battery electric vehicle, a hybrid electric vehicle, a plug-in hybrid electric vehicle, or the like. To satisfy requirements of the electric apparatus for high power and high energy density of a battery cell, a battery pack or a battery module may be used.

### [Examples]

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1

### (1) Preparation of precursor:

1182 g of Li₂CO₃, 3325 g of NH₄H₂PO₄, 2899 g of MnSO₄, and 1945 g of FeSO₄ were added to 14 kg of pure water, stirred for reaction at 25°C for 60 minutes, and filtered to collect a precipitate. The precipitate was washed with pure water, filtered, ball-milled at a rotation speed of 350 rpm for 120 minutes, dried at 100°C for 120 minutes, and crushed to obtain dry powder. The dry powder was placed in a nitrogen atmosphere sintering furnace and sintered at a constant temperature of 500°C for 3 hours to obtain a precursor.

### (2) Preparation of positive electrode material:

5000 g of the precursor was added to 14 kg of a glucose aqueous solution (containing 1 kg of glucose), and 19 g of Mg(OH)₂, 26 g of TiO₂, 37 g of NH₄VO₃, 25 g of H₂SiO₃, 6 g of Cr₂O₃, 28 g of MnO₂, 6 g of Fe₂O₃, 29 g of CoO₂, 24 g of NiO, and 20 g of H₃BO₃ were added, followed by grinding in a sand mill at 25°C for 3 hours to obtain a slurry. Part of the slurry passing through a 400-mesh sieve was collected and spray-dried at 300°C to obtain dry powder. The dry powder was placed in a nitrogen atmosphere furnace at 800°C and sintered for 6 hours. Then, the resulting product was cooled then taken out, and crushed until the resulting product could completely pass through an 800-mesh sieve to obtain a positive electrode material with a particle size Dᵥ50 of 12 µm.

### (3) Preparation of positive electrode plate:

A positive electrode material, polyvinylidene fluoride, conductive carbon black, and N-methylpyrrolidone were dissolved in a solvent N-methylpyrrolidone (NMP) at a weight ratio of 95:2.5:2.5:100 and stirred and mixed well to prepare a positive electrode slurry. Then, the positive electrode slurry was uniformly applied on a positive electrode current collector aluminum foil, followed by drying, cold pressing, and slitting to obtain a positive electrode plate.

### (4) Preparation of negative electrode plate:

A negative electrode active material artificial graphite, a conductive agent acetylene black, a binder styrene-butadiene rubber (SBR), and a thickener sodium carboxymethyl cellulose (CMC-Na) were dissolved in deionized water at a weight ratio of 95.5:1.5:1.8:1.2 and stirred and mixed well to prepare a negative electrode slurry. Then, the negative electrode slurry was applied on a negative electrode current collector copper foil, followed by drying, cold pressing, and slitting to obtain a negative electrode plate.

### (5) Separator: A polypropylene film was used.

### (6) Preparation of electrolyte:

Ethylene carbonate (EC), ethyl methyl carbonate (EMC), and diethyl carbonate (DEC) were mixed at a volume ratio of 1:1:1, and LiPF₆ was then dissolved well in the above solution to obtain an electrolyte. A concentration of LiPF₆ in the electrolyte was 1 mol/L.

### (7) Preparation of button battery:

The positive electrode plate, separator, and negative electrode plate described above were stacked sequentially; the resulting stack was wound to obtain an electrode assembly; the electrode assembly was placed in an outer package; and the prepared electrolyte was added, followed by processes such as sealing, standing, formation, and aging, to obtain a secondary battery.

Preparation methods of secondary batteries in Examples 2 to 46 and Comparative Example 3 were similar to the preparation method of the secondary battery in Example 1, but the parameters were adjusted. Details were shown in Table 1-2. The preparation methods in Comparative Examples 1 and 2 were described below.

### Comparative Example 1

1182 g of Li₂CO₃, 3325 g of NH₄H₂PO₄, 2899 g of MnSO₄, and 1945 g of FeSO₄ were added to 14 kg of pure water and stirred for reaction at 25°C for 60 minutes, followed by the addition of 19 g of Mg(OH)₂, 26 g of TiO₂, 37 g of NH₄VO₃, 25 g of H₂SiO₃, 6 g of Cr₂O₃, 28 g of MnO₂, 6 g of Fe₂O₃, 29 g of CoO₂, 24 g of NiO, and 20 g of H₃BO₃, mixed, and then washed to collect a precipitate. The precipitate was microwave-dried for 25 minutes at a heating power of 800 W and crushed to obtain dry powder. The dry powder was placed in a nitrogen atmosphere sintering furnace and sintered at a constant temperature of 650°C for 6 hours to obtain a precursor.

5000 g of the precursor and 1 kg of glucose were mixed. The resulting mixture was ground at 300 rpm for 1 hour and sintered in a nitrogen atmosphere furnace at 800°C for 5 hours. Then, the resulting product was cooled, then taken out, and crushed until the resulting product could completely pass through an 800-mesh sieve to obtain a positive electrode material.

### Comparative Example 2

1182 g of Li₂CO₃, 3325 g of NH₄H₂PO₄, 2899 g of MnSO₄, and 1945 g of FeSO₄ were added to 14 kg of pure water and stirred for reaction at 25°C for 60 minutes, followed by the addition of 28 g of MnO₂, 6 g of Fe₂O₃, 6 g of Cr₂O₃, and 29 g of CoO₂, mixed, and then washed to collect a precipitate. The precipitate was microwave-dried for 25 minutes at a heating power of 800 W and crushed to obtain dry powder. The dry powder was placed in a nitrogen atmosphere sintering furnace and sintered at a constant temperature of 650°C for 6 hours to obtain a precursor.

5000 g of the precursor and 1 kg of glucose were mixed; the resulting mixture was ground at 300 rpm for 1 hour and sintered in a nitrogen atmosphere furnace at 800°C for 5 hours. The resulting product was cooled then taken out, and crushed until the resulting product could completely pass through an 800-mesh sieve to obtain a positive electrode material.

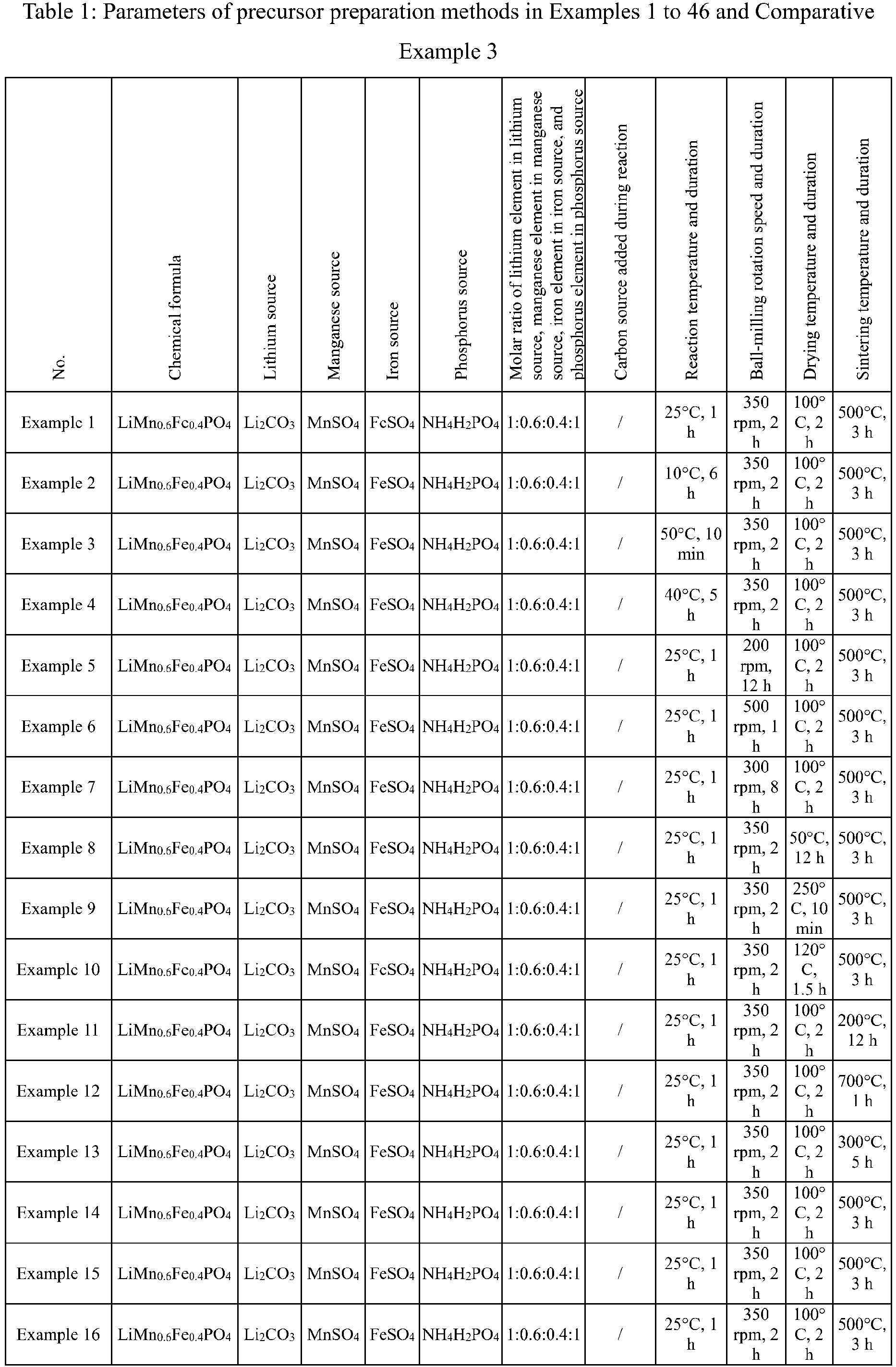

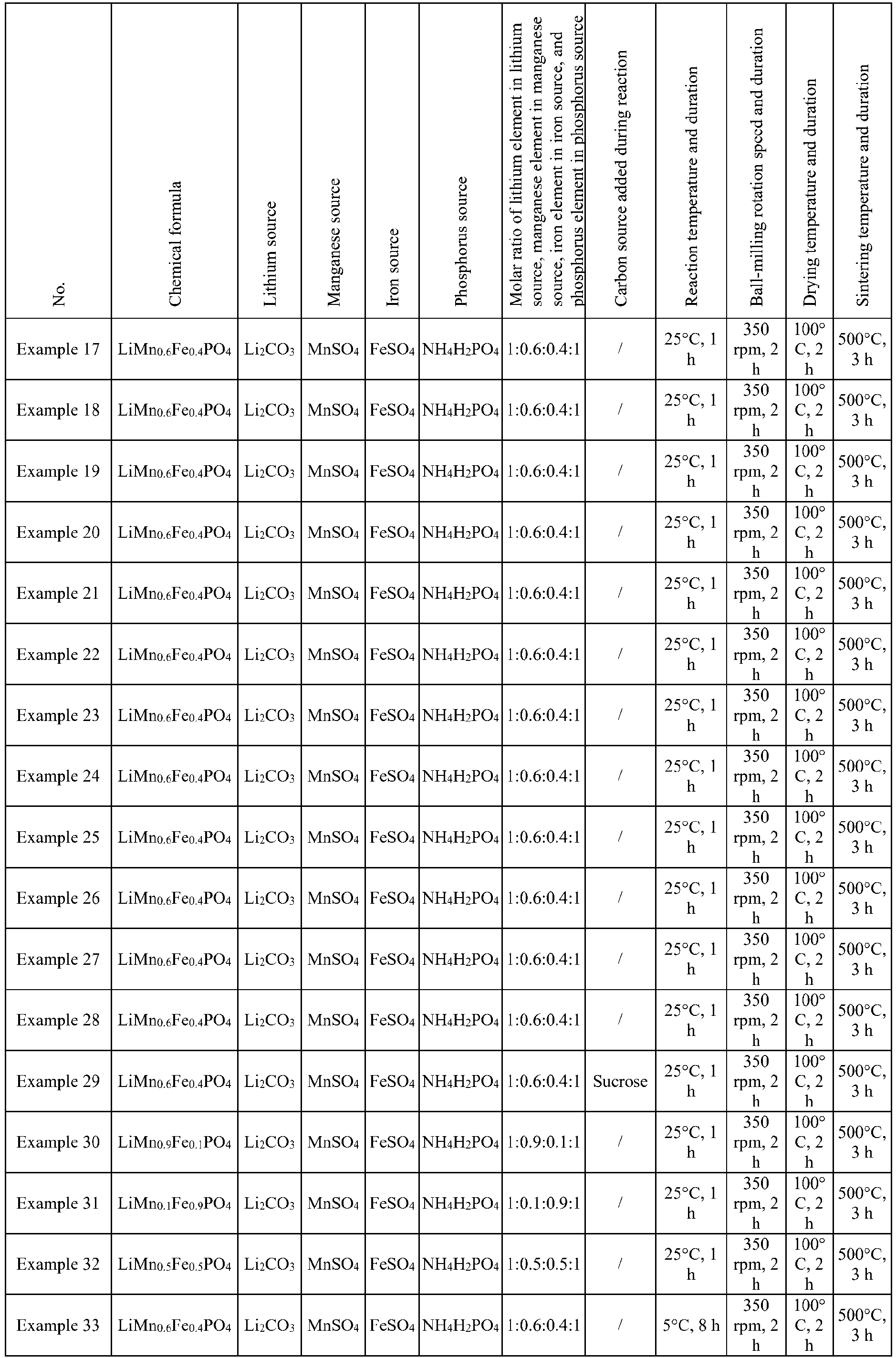

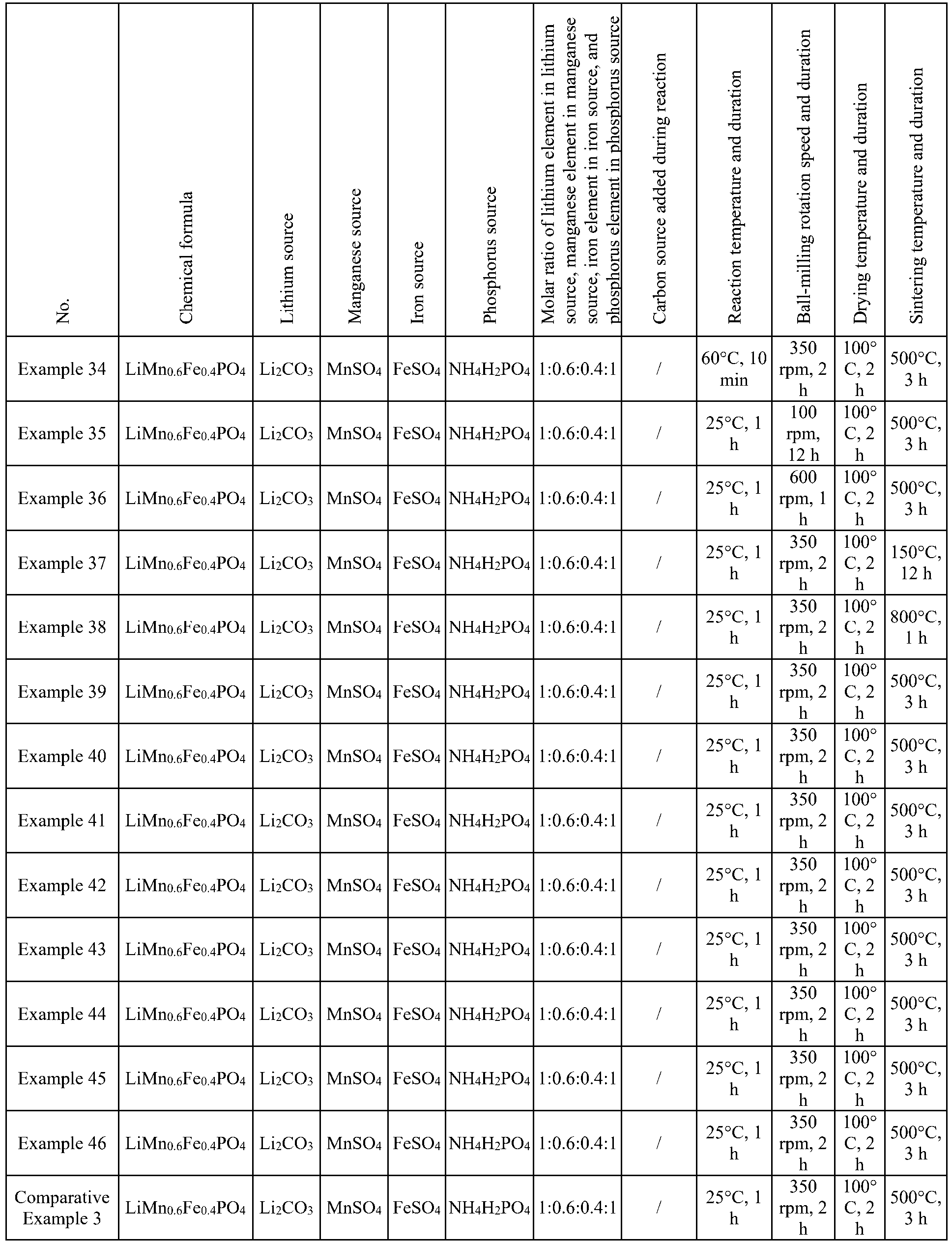

**Table 2: Parameters of preparation methods of positive electrode materials in Examples 1 to 46 and Comparative Example 3**

| No. | Carbon source | Source of doping element* | Molar ratio of precursor to carbon element in carbon source | Molar ratio of precursor to doping element in source of doping element | Grinding temperature and duration | Drying temperature | Sintering temperature and duration |
|---|---|---|---|---|---|---|---|
| Example 1 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 2 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 3 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 4 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 5 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 6 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 7 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 8 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 9 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 10 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 11 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 12 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 13 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 14 | Glucose | Cr₂O₃, Fe₂O₃, MnO₂, CoO₂ | 1:0.5 | 1:0.04 | 25°C, 3 h | 300°C | 800°C, 6 h |
| Example 15 | Glucose | Mg(OH)₂, TiO₂, NH₄VO₃, H₂SiO₃, Cr₂O₃, MnO₂, Fe₂O₃, CoO₂, NiO, H₃BO₃ | 1:1.45 | 1:0.1 | 25°C, 3 h | 300°C | 800°C, 6 h |
| Example 16 | Glucose | Mg(OH)₂, TiO₂, NH₄VO₃, H₂SiO₃, Cr₂O₃, MnO₂, Fe₂O₃, CoO₂, NiO, H₃BO₃ | 1:0.01 | 1:0.1 | 25°C, 3 h | 300°C | 800°C, 6 h |
| Example 17 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.2 | 25°C, 3 h | 300°C | 800°C, 6 h |
| Example 18 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.0001 | 25°C, 3 h | 300°C | 800°C, 6 h |
| Example 19 | Glucose | Mg(OH)₂, TiO₂, NH₄VO₃, H₂SiO₃, MnO₂, Fe₂O₃ | 1:0.45 | 1:0.07 | 25°C, 3 h | 300°C | 800°C, 6 h |
| Example 20 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 10°C, 12 h | 300°C | 800°C, 6 h |
| Example 21 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 60°C, 0.5 h | 300°C | 800°C, 6 h |
| Example 22 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 30°C, 2 h | 300°C | 800°C, 6 h |
| Example 23 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 400°C | 800°C, 6 h |
| Example 24 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 150°C | 800°C, 6 h |
| Example 25 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 270°C | 800°C, 6 h |
| Example 26 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 400°C, 20 h |
| Example 27 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 900°C, 2 h |
| Example 28 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 850°C, 4 h |
| Example 29 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 30 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 31 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 32 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 33 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 34 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 35 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 36 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 37 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 38 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 800°C, 6 h |
| Example 39 | Glucose | Mg(OH)₂, TiO₂, NH₄VO₃, H₂SiO₃, Cr₂O₃, MnO₂, Fe₂O₃, CoO₂, NiO, H₃BO₃ | 1:0.001 | 1:0.1 | 25°C, 3 h | 300°C | 800°C, 6 h |
| Example 40 | Glucose | Mg(OH)₂, TiO₂, NH₄VO₃, H₂SiO₃, Cr₂O₃, MnO₂, Fe₂O₃, CoO₂, NiO, H₃BO₃ | 1:1.5 | 1:0.1 | 25°C, 3 h | 300°C | 800°C, 6 h |
| Example 41 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.00001 | 25°C, 3 h | 300°C | 800°C, 6 h |
| Example 42 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.25 | 25°C, 3 h | 300°C | 800°C, 6 h |
| Example 43 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 5°C, 12 h | 300°C | 800°C, 6 h |
| Example 44 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 70°C, 0.5 h | 300°C | 800°C, 6 h |
| Example 45 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 350°C, 20 h |
| Example 46 | Glucose | Mg(OH)₂, TiO₂, NH₄VO₃, H₂SiO₃, Cr₂O₃, MnO₂, Fe₂O₃, CoO₂, NiO, H₃BO₃ | 1:0.5 | 1:0.1 | 25°C, 3 h | 300°C | 950°C, 2 h |
| Comparative Example 3 | Glucose | / | 1:0.5 | / | 25°C, 3 h | 300°C | 800°C, 6 h |

**Table 3: Parameters of positive electrode materials in Examples 1 to 46 and Comparative Examples 1 to 3**

| No. | Core | Coating layer | BET (m²/g) | Powder resistivity (Ω·cm) | Molar ratio of Mn to Fe in core |
|---|---|---|---|---|---|
| Example 1 | LiMn_{0.6}Fe_{0.4}PO₄ | C, Mg, Ti, V, Si, Cr, Mn, Fe, Co, Ni, B | 13.5 | 28.1 | 6:4 |
| Example 2 | LiMn_{0.6}Fe_{0.4}PO₄ | C, Mg, Ti, V, Si, Cr, Mn, Fe, Co, Ni, B | 13.6 | 29.9 | 6:4 |
| Example 3 | LiMn_{0.6}Fe_{0.4}PO₄ | C, Mg, Ti, V, Si, Cr, Mn, Fe, Co, Ni, B | 13.2 | 20.1 | 6:4 |
| Example 4 | LiMn_{0.6}Fe_{0.4}PO₄ | C, Mg, Ti, V, Si, Cr, Mn, Fe, Co, Ni, B | 13.3 | 28.6 | 6:4 |
| Example 5 | LiMn_{0.6}Fe_{0.4}PO₄ | C, Mg, Ti, V, Si, Cr, Mn, Fe, Co, Ni, B | 13.9 | 21.7 | 6:4 |
| Example 6 | LiMn_{0.6}Fe_{0.4}PO₄ | C, Mg, Ti, V, Si, Cr, Mn, Fe, Co, Ni, B | 13.1 | 26.8 | 6:4 |
| Example 7 | LiMn_{0.6}Fe_{0.4}PO₄ | C, Mg, Ti, V, Si, Cr, Mn, Fe, Co, Ni, B | 13.5 | 22.8 | 6:4 |
| Example 8 | LiMn_{0.6}Fe_{0.4}PO₄ | C, Mg, Ti, V, Si, Cr, Mn, Fe, Co, Ni, B | 13.5 | 24.1 | 6:4 |
| Example 9 | LiMn_{0.6}Fe_{0.4}PO₄ | C, Mg, Ti, V, Si, Cr, Mn, Fe, Co, Ni, B | 13.8 | 29.1 | 6:4 |
| Example 10 | LiMn_{0.6}Fe_{0.4}PO₄ | C, Mg, Ti, V, Si, Cr, Mn, Fe, Co, Ni, B | 13.1 | 22.5 | 6:4 |
| Example 11 | LiMn_{0.6}Fe_{0.4}PO₄ | C, Mg, Ti, V, Si, Cr, Mn, Fe, Co, Ni, B | 13.6 | 24.2 | 6:4 |
| Example 12 | LiMn_{0.6}Fe_{0.4}PO₄ | C, Mg, Ti, V, Si, Cr, Mn, Fe, Co, Ni, B | 13.7 | 28.3 | 6:4 |
| Example 13 | LiMn_{0.6}Fe_{0.4}PO₄ | C, Mg, Ti, V, Si, Cr, Mn, Fe, Co, Ni, B | 13.1 | 22.1 | 6:4 |
| Example 14 | LiMn_{0.6}Fe_{0.4}PO₄ | C, Cr, Mn, Fe, Co | 13.3 | 24.3 | 6:4 |
| Example 15 | LiMn_{0.6}Fe_{0.4}PO₄ | C, Mg, Ti, V, Si, Cr, Mn, Fe, Co, Ni, B | 14.9 | 12.1 | 6:4 |
| Example 16 | LiMn_{0.6}Fe_{0.4}PO₄ | C, Mg, Ti, V, Si, Cr, Mn, Fe, Co, Ni, B | 12.8 | 84.3 | 6:4 |
| Example 17 | LiMn_{0.6}Fe_{0.4}PO₄ | C, Mg, Ti, V, Si, Cr, Mn, Fe, Co, Ni, B | 13.9 | 24.8 | 6:4 |
| Example 18 | LiMn_{0.6}Fe_{0.4}PO₄ | C, Mg, Ti, V, Si, Cr, Mn, Fe, Co, Ni, B | 13.7 | 26.5 | 6:4 |
| Example 19 | LiMn_{0.6}Fe_{0.4}PO₄ | C, Mg, Ti, V, Si, Mn, Fe | 13.1 | 23.8 | 6:4 |
| Example 20 | LiMn_{0.6}Fe_{0.4}PO₄ | C, Mg, Ti, V, Si, Cr, Mn, Fe, Co, Ni, B | 13 | 22.1 | 6:4 |
| Example 21 | LiMn_{0.6}Fe_{0.4}PO₄ | C, Mg, Ti, V, Si, Cr, Mn, Fe, Co, Ni, B | 13.6 | 27.2 | 6:4 |
| Example 22 | LiMn_{0.6}Fe_{0.4}PO₄ | C, Mg, Ti, V, Si, Cr, Mn, Fe, Co, Ni, B | 13.8 | 26.6 | 6:4 |
| Example 23 | LiMn_{0.6}Fe_{0.4}PO₄ | C, Mg, Ti, V, Si, Cr, Mn, Fe, Co, Ni, B | 13.1 | 23.1 | 6:4 |
| Example 24 | LiMn_{0.6}Fe_{0.4}PO₄ | C, Mg, Ti, V, Si, Cr, Mn, Fe, Co, Ni, B | 13.4 | 22.5 | 6:4 |
| Example 25 | LiMn_{0.6}Fe_{0.4}PO₄ | C, Mg, Ti, V, Si, Cr, Mn, Fe, Co, Ni, B | 13.2 | 22.1 | 6:4 |
| Example 26 | LiMn_{0.6}Fe_{0.4}PO₄ | C, Mg, Ti, V, Si, Cr, Mn, Fe, Co, Ni, B | 15.1 | 95.7 | 6:4 |
| Example 27 | LiMn_{0.6}Fe_{0.4}PO₄ | C, Mg, Ti, V, Si, Cr, Mn, Fe, Co, Ni, B | 12.1 | 14.1 | 6:4 |
| Example 28 | LiMn_{0.6}Fe_{0.4}PO₄ | C, Mg, Ti, V, Si, Cr, Mn, Fe, Co, Ni, B | 13.9 | 37.8 | 6:4 |
| Example 29 | LiMn_{0.6}Fe_{0.4}PO₄ | C, Mg, Ti, V, Si, Cr, Mn, Fe, Co, Ni, B | 13.3 | 29.9 | 6:4 |
| Example 30 | LiMn_{0.9}Fe_{0.1}PO₄ | C, Mg, Ti, V, Si, Cr, Mn, Fe, Co, Ni, B | 14.1 | 34.2 | 9:1 |
| Example 31 | LiMn_{0.1}Fe_{0.9}PO₄ | C, Mg, Ti, V, Si, Cr, Mn, Fe, Co, Ni, B | 13.8 | 31.7 | 1:9 |
| Example 32 | LiMn_{0.5}Fe_{0.5}PO₄ | C, Mg, Ti, V, Si, Cr, Mn, Fe, Co, Ni, B | 13.5 | 29.9 | 1:1 |
| Example 33 | LiMn_{0.6}Fe_{0.4}PO₄ | C, Mg, Ti, V, Si, Cr, Mn, Fe, Co, Ni, B | 13.3 | 26.3 | 6:4 |
| Example 34 | LiMn_{0.6}Fe_{0.4}PO₄ | C, Mg, Ti, V, Si, Cr, Mn, Fe, Co, Ni, B | 13.8 | 26.2 | 6:4 |
| Example 35 | LiMn_{0.6}Fe_{0.4}PO₄ | C, Mg, Ti, V, Si, Cr, Mn, Fe, Co, Ni, B | 13.7 | 22.3 | 6:4 |
| Example 36 | LiMn_{0.6}Fe_{0.4}PO₄ | C, Mg, Ti, V, Si, Cr, Mn, Fe, Co, Ni, B | 13.8 | 28.7 | 6:4 |
| Example 37 | LiMn_{0.6}Fe_{0.4}PO₄ | C, Mg, Ti, V, Si, Cr, Mn, Fe, Co, Ni, B | 25.4 | 25.4 | 6:4 |
| Example 38 | LiMn_{0.6}Fe_{0.4}PO₄ | C, Mg, Ti, V, Si, Cr, Mn, Fe, Co, Ni, B | 13.6 | 28.8 | 6:4 |
| Example 39 | LiMn_{0.6}Fe_{0.4}PO₄ | C, Mg, Ti, V, Si, Cr, Mn, Fe, Co, Ni, B | 12.1 | 1116.5 | 6:4 |
| Example 40 | LiMn_{0.6}Fe_{0.4}PO₄ | C, Mg, Ti, V, Si, Cr, Mn, Fe, Co, Ni, B | 26.5 | 10.1 | 6:4 |
| Example 41 | LiMn_{0.6}Fe_{0.4}PO₄ | C, Mg, Ti, V, Si, Cr, Mn, Fe, Co, Ni, B | 13.4 | 27.9 | 6:4 |
| Example 42 | LiMn_{0.6}Fe_{0.4}PO₄ | C, Mg, Ti, V, Si, Cr, Mn, Fe, Co, Ni, B | 13.2 | 26.8 | 6:4 |
| Example 43 | LiMn_{0.6}Fe_{0.4}PO₄ | C, Mg, Ti, V, Si, Cr, Mn, Fe, Co, Ni, B | 13.9 | 66.5 | 6:4 |
| Example 44 | LiMn_{0.6}Fe_{0.4}PO₄ | C, Mg, Ti, V, Si, Cr, Mn, Fe, Co, Ni, B | 13.6 | 26.3 | 6:4 |
| Example 45 | LiMn_{0.6}Fe_{0.4}PO₄ | C, Mg, Ti, V, Si, Cr, Mn, Fe, Co, Ni, B | 26.7 | 276.3 | 6:4 |
| Example 46 | LiMn_{0.6}Fe_{0.4}PO₄ | C, Mg, Ti, V, Si, Cr, Mn, Fe, Co, Ni, B | 11.9 | 11.3 | 6:4 |
| Comparative Example 1 | LiMn_{0.6}Fe_{0.4}Mg_{0.01}Ti_{0.01}V₀. ₀₁Si_{0.01}Cr_{0.01}Mn_{0.01}Fe_{0.01}Co _{0.01}N1_{0.01}B_{0.01}PO₄ | C | 23.5 | 2213 | 40:1 |
| Comparative Example 2 | LiMn_{0.6}Fe_{0.4}Cr_{0.01}Co_{0.01}PO₄ | C | 24.1 | 1340 | 6:4 |
| Comparative Example 3 | LiMn_{0.6}Fe_{0.4}PO₄ | C | 21.3 | 230.8 | 6:4 |

### Test of material and battery

### (1) Test of chemical formula of precursor, coating layer composition and element ratio of positive electrode material:

0.2 g of a precursor or positive electrode material was weighed and placed in a 100 mL beaker, 10 mL of a 10%w/w nitric acid solution was added, followed by heating at 120°C for digestion for 0.5 hours, and diluting to a fixed volume using a 100 mL volumetric flask. Then, 1 mL of the solution was pipetted into a 100 mL volumetric flask using a pipette and diluted to a fixed volume to obtain a solution under test.

An inductively coupled plasma optical emission spectrometer (ICP-OES, instrument brand: Agilent 5800) was used to measure the mass fractions of lithium, manganese, iron, phosphorus, doping elements, and other elements in the solution under test; based on the mass fractions of the elements in the solution under test of the precursor, the molar proportions of the elements in the precursor were calculated to determine the chemical formula and molar ratio of the elements in the precursor; based on the mass fractions of the elements in the solution under test of the positive electrode material, the molar proportions of the elements in the positive electrode material were calculated, and the molar proportions of the elements in the precursor were subtracted to obtain the element composition of the coating layer, thereby calculating the element molar ratio.

0.1 g of the positive electrode material was weighed, with the addition of 1.5 g of flux metal tungsten particles, and mixing was performed. Then, the resulting mixture was placed in a high-frequency infrared carbon-sulfur analyzer, followed by sintering and testing the weight percentage of carbon in the positive electrode material, and converting the weight percentage of carbon to a molar ratio.

### (2) Test of particle size Dᵥ50:

An appropriate amount of a sample was taken, 20 mL of deionized water was added, and ultrasonic treatment was performed for 5 minutes (53 kHz, 120 W) to fully disperse the sample; and a laser particle size analyzer (MasterSizer 2000) was used to test the particle size Dᵥ50 of the material.

### (3) Test of BET specific surface area:

1 g of a sample was weighed and placed in a specific surface area test tube, a liquid nitrogen cup was filled with liquid nitrogen, and the specific surface area test tube was placed in the liquid nitrogen cup, the sample was kept at a temperature of -200°C, and testing was performed using a specific surface area analyzer (Beijing JWGB, JWBK-112).

### (4) Test of powder resistivity of positive electrode material:

1 g of a sample was weighed and placed in a mold, then the mold was placed in a four-probe resistivity tester, the pressure was adjusted to 7.85 MPa, a forward resistivity and a reverse resistivity of the sample were tested respectively after the height and pressure of the mold were stable, and an average of the two was taken as the powder resistivity of the sample.

### (5) TEM test of positive electrode material:

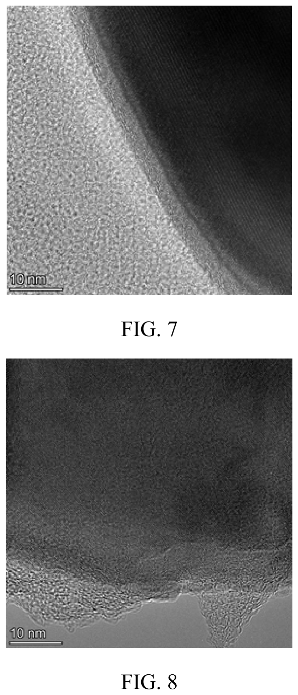

The positive electrode materials in Example 1 and Comparative Example 3 were subjected to TEM test, and the results were shown in FIGs. 7 and 8. A comparison revealed that the coating layer of the positive electrode material in Example 1 of this application was more complete and structurally tighter, and the positive electrode material exhibited a more uniform and stable texture.

### (6) Test of charge gram capacity and discharge gram capacity of battery:

A Shenzhen Neware battery testing system was used. A button battery was subjected to charge and discharge cycles at a charge and discharge rate of 0.1 C, where a test temperature was 25.0°C, and a charge and discharge voltage was 2.0 V to 4.3 V. A charge gram capacity was obtained by dividing a charge capacity of the first cycle by the mass of the positive electrode material, and a discharge gram capacity was obtained by dividing a discharge capacity of the first cycle by the mass of the positive electrode material.

### (7) Test of capacity retention rate of battery at 25°C:

A Shenzhen Neware battery testing system was used. A button battery was subjected to charge and discharge cycles at a charge and discharge rate of 1 C, where 2000 cycles were performed, a test temperature was 25.0°C, and a charge and discharge voltage was 2.0 V to 4.3 V. A capacity retention rate was obtained by dividing a discharge capacity of the last cycle by a discharge capacity of the first cycle.

The above results are shown in Tables 3 and 4.

**Table 4: Performance test results of Examples 1 to 46 and Comparative Examples 1 to 3**

| No. | Charge gram capacity (mAh/g) | Discharge gram capacity (mAh/g) | Cycling capacity retention rate |
|---|---|---|---|
| Example 1 | 156.8 | 152.8 | 97.9% |
| Example 2 | 155.5 | 151.2 | 96.8% |
| Example 3 | 155.9 | 151.1 | 96.1% |
| Example 4 | 156.1 | 151.8 | 96.5% |
| Example 5 | 155.6 | 149.7 | 95.6% |
| Example 6 | 154.3 | 150.9 | 97.0% |
| Example 7 | 156.6 | 152.6 | 96.3% |
| Example 8 | 155.8 | 150.6 | 95.3% |
| Example 9 | 156.3 | 150.2 | 95.8% |
| Example 10 | 155.6 | 152.1 | 96.2% |
| Example 11 | 156.1 | 150.3 | 95.1% |
| Example 12 | 155.8 | 149.5 | 95.4% |
| Example 13 | 156.3 | 152.3 | 96.6% |
| Example 14 | 155.1 | 149.9 | 97.3% |
| Example 15 | 155.8 | 150.2 | 98.3% |
| Example 16 | 154.8 | 148.6 | 96.5% |
| Example 17 | 154.1 | 145.4 | 95.8% |
| Example 18 | 153.8 | 145.8 | 96.1% |
| Example 19 | 156.5 | 152 | 97.1% |
| Example 20 | 154.1 | 149.2 | 95.9% |
| Example 21 | 155.5 | 150.8 | 96.9% |
| Example 22 | 156.1 | 152.1 | 97.2% |
| Example 23 | 154.3 | 149.5 | 96.3% |
| Example 24 | 155.2 | 150.4 | 96.1% |
| Example 25 | 156.3 | 151.3 | 96.9% |
| Example 26 | 150.3 | 146.5 | 97.4% |
| Example 27 | 154.2 | 148.4 | 95.9% |
| Example 28 | 156.1 | 152.2 | 96.9% |
| Example 29 | 156.1 | 152.2 | 97.2% |
| Example 30 | 154.9 | 150.5 | 97.1% |
| Example 31 | 155.4 | 151.1 | 96.4% |
| Example 32 | 156.9 | 151.6 | 95.3% |
| Example 33 | 145.3 | 133.9 | 76.7% |
| Example 34 | 146.1 | 131.6 | 78.7% |
| Example 35 | 145.7 | 130.5 | 80.6% |
| Example 36 | 145.1 | 130.2 | 78.5% |
| Example 37 | 145.5 | 131.3 | 79.6% |
| Example 38 | 144.1 | 129.7 | 77.5% |
| Example 39 | 146.8 | 136.8 | 75.8% |
| Example 40 | 154.3 | 148.5 | 97.2% |
| Example 41 | 143.8 | 133.5 | 67.3% |
| Example 42 | 144.6 | 131.2 | 66.7% |
| Example 43 | 150.9 | 143.5 | 91.8% |
| Example 44 | 151.4 | 142.1 | 90.7% |
| Example 45 | 96.1 | 41.8 | 35.6% |
| Example 46 | 102.1 | 72.2 | 45.8% |
| Comparative Example 1 | 145.3 | 133.7 | 72.5% |
| Comparative Example 2 | 149.2 | 143.5 | 77.9% |
| Comparative Example 3 | 145.5 | 131.6 | 65.8% |

From the above results, it can be seen that:
As compared with Comparative Example 1 in which the doping element is added to the core, the batteries in Examples 1 to 13, 15 to 18, 20 to 29, 33 to 40, 43, and 44 of this application have significantly higher cycling capacity retention rates, and the batteries in Examples 1 to 13, 15 to 18, 20 to 29, 39, 40, 43, and 44 of this application have significantly higher charge and discharge gram capacities.

As compared with Comparative Example 2 in which the doping element is added to the core, the battery in Example 14 of this application has significantly higher charge and discharge gram capacities and a significantly higher cycling capacity retention rate.

As compared with Comparative Example 3 in which no doping element is added to the core or shell, the batteries in Examples 1, 14, 17, 18, 41, and 42 of this application have significantly higher cycling capacity retention rates, and the batteries in Examples 1, 14, 17, and 18 of this application have significantly higher charge and discharge gram capacities.

As compared with Example 33 in which a lower reaction temperature and a longer reaction duration are used during preparation of the precursor, and Example 34 in which a higher reaction temperature is used during preparation of the precursor, the batteries in Examples 1 to 4 of this application have significantly higher charge and discharge gram capacities and significantly higher cycling capacity retention rates.

As compared with Example 35 in which a lower ball-milling rotation speed is used during preparation of the precursor, and Example 36 in which a higher ball-milling rotation speed is used during preparation of the precursor, the batteries in Examples 1 and 5 to 7 of this application have significantly higher charge and discharge gram capacities and significantly higher cycling capacity retention rates.

As compared with Example 37 in which a lower sintering temperature is used during preparation of the precursor, and Example 38 in which a higher sintering temperature is used during preparation of the precursor, the batteries in Examples 1 and 11 to 13 of this application have significantly higher charge and discharge gram capacities and significantly higher cycling capacity retention rates.

As compared with Example 39 in which a lower molar ratio of the precursor to the carbon element is used during preparation of the positive electrode material, the batteries in Examples 1, 15, and 16 of this application have significantly higher charge and discharge gram capacities and significantly higher cycling capacity retention rates; and as compared with Example 40 in which a higher molar ratio of the precursor to the carbon element is used during preparation of the positive electrode material, the batteries in Examples 1, 15, and 16 of this application have significantly higher charge and discharge gram capacities.

As compared with Example 41 in which a lower molar ratio of the precursor to the doping element is used during preparation of the positive electrode material, and Example 42 in which a higher molar ratio of the precursor to the doping element is used during preparation of the positive electrode material, the batteries in Examples 1, 17, and 18 of this application have significantly higher charge and discharge gram capacities and significantly higher cycling capacity retention rates.

As compared with Example 43 in which a lower grinding temperature is used during preparation of the positive electrode material, and Example 44 in which a higher grinding temperature is used during preparation of the positive electrode material, the batteries in Examples 1 and 20 to 22 of this application have significantly higher charge and discharge gram capacities and significantly higher cycling capacity retention rates.

As compared with Example 45 in which a lower sintering temperature is used during preparation of the positive electrode material, and Example 46 in which a higher sintering temperature is used during preparation of the positive electrode material, the batteries in Examples 1 and 26 to 28 of this application have significantly higher charge and discharge gram capacities and significantly higher cycling capacity retention rates.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, within the scope without departing from the essence of this application, various modifications made to the embodiments that can be conceived by persons skilled in the art, and other manners constructed by combining some of the constituent elements in the embodiments are also included in the scope of this application.

## Claims

1. A method for preparing a positive electrode material, comprising:
mixing a precursor lithium manganese iron phosphate, a carbon source, and a source of a doping element in a solvent, drying, and sintering to obtain a positive electrode material; wherein
the positive electrode material comprises a core and a coating layer coating the core; the core comprises LiMnₓFe₁₋ₓPO₄, wherein 0 < x < 1; the coating layer comprises carbon and a doping element; and the doping element comprises one or more of Group IIA elements, Group IIIA elements, Group IVA elements, and transition metal elements.

2. The method according to claim 1, wherein
0.1 ≤ x ≤ 0.9; and/or
the doping element comprises one or more elements of Mg, Ti, V, Si, Cr, Mn, Fe, Co, Ni, and B.

3. The method according to claim 1 or 2, wherein a molar ratio of the precursor to a carbon element in the carbon source is 1:1.5 to 1:0.001, optionally 1:1.45 to 1:0.01; and/or
a molar ratio of the precursor to a doping element in the source of the doping element is 1:0.25 to 1:0.00001, optionally 1:0.2 to 1:0.0001.

4. The method according to any one of claims 1 to 3, wherein the mixing is performed at 5°C to 70°C, and optionally, the mixing is performed at 10°C to 60°C; and/or
a mixing duration is 0.5 hours to 12 hours; and/or
the mixing is performed by grinding.

5. The method according to any one of claims 1 to 4, wherein a sintering temperature is 350°C to 950°C, optionally 400°C to 900°C; and/or
a sintering duration is 2 hours to 20 hours; and/or
the sintering is performed in an inert atmosphere.

6. The method according to any one of claims 1 to 5, wherein a drying temperature is 150°C to 400°C; and/or
the drying is performed by spray drying or oven drying; and/or
the method further comprises sieving a mixture before the drying and collecting a sieved portion; and/or
the method further comprises crushing after the sintering, optionally followed by sieving; and/or
the carbon source comprises one or more of an organic carbon source and an inorganic carbon source, optionally comprising one or more of citric acid, glucose, sucrose, polyvinyl alcohol, polypyrrole, polyethylene glycol, asphalt, anthracene, and aniline; and/or
the source of the doping element comprises one or more of a hydroxide of the doping element, an oxide of the doping element, an acid of the doping element, and a salt of the doping element; and/or
the solvent comprises one or more of water and an organic solvent, and optionally, the solvent comprises one or more of water, ethanol, methanol, acetone, ethylene glycol, and isopropanol.

7. The method according to any one of claims 1 to 6, wherein the precursor is prepared by the following steps:
reacting a lithium source, a manganese source, an iron source, and a phosphorus source in a solvent, performing solid-liquid separation, and collecting a solid-phase material; and
drying and sintering the solid-phase material to obtain the precursor.

8. The method according to claim 7, wherein the precursor comprises LiMnₓFe₁₋ₓPO₄, wherein 0 < x < 1, optionally 0.1 ≤ x ≤ 0.9; and
optionally, in the steps of preparing the precursor, a molar ratio of a lithium element in the lithium source, a manganese element in the manganese source, an iron element in the iron source, and a phosphorus element in the phosphorus source is 1:x:(1-x):1.

9. The method according to claim 7 or 8, wherein in the steps of preparing the precursor, the reaction is performed at 5°C to 60°C, and optionally, the reaction is performed at 10°C to 50°C; and/or
a reaction duration is 10 minutes to 8 hours, optionally 10 minutes to 6 hours; and/or
a drying temperature is 50°C to 250°C; and/or
a drying duration is 10 minutes to 12 hours; and/or
a sintering temperature is 150°C to 800°C, optionally 200°C to 700°C; and/or
a sintering duration is 1 hour to 12 hours; and/or
the sintering is performed in an inert atmosphere.

10. The method according to any one of claims 7 to 9, wherein in the steps of preparing the precursor, the solid-liquid separation is performed by filtration or centrifugation; and/or
before the drying, the solid-phase material is ball-milled; and optionally, a ball-milling rotation speed is 100 rpm to 600 rpm, optionally 200 rpm to 500 rpm, and a ball-milling duration is 1 hour to 12 hours, optionally 2 hours to 10 hours; and/or
before the drying, the solid-phase material is washed; and/or
between the drying and the sintering, the solid-phase material is crushed; and/or
the lithium source comprises one or more of a hydroxide, oxide, inorganic acid salt, and organic acid salt of a lithium element, optionally comprising one or more of lithium hydroxide, lithium oxide, lithium carbonate, lithium acetate, lithium oxalate, lithium phosphate, and lithium chloride; and/or
the manganese source comprises one or more of an organic acid salt, inorganic acid salt, oxide, and hydroxide of a manganese element; and/or
the iron source comprises one or more of an organic acid salt, inorganic acid salt, oxide, and hydroxide of an iron element; and/or
the phosphorus source comprises one or more of phosphoric acid, phosphate, hydrogen phosphate, and dihydrogen phosphate, optionally comprising one or more of phosphoric acid, iron phosphate, ferrous phosphate, ammonium ferrous phosphate, ammonium dihydrogen phosphate, ammonium hydrogen phosphate, ammonium phosphate, lithium hydrogen phosphate, lithium dihydrogen phosphate, and lithium phosphate; and/or
a carbon source is added during the reaction process.

11. A positive electrode material, comprising a core and a coating layer coating the core, wherein the core comprises LiMnₓFe₁₋ₓPO₄, wherein 0 < x < 1, optionally 0.1 ≤ x ≤ 0.9; the coating layer comprises carbon and a doping element; and the doping element comprises one or more of Group IIA elements, Group IIIA elements, Group IVA elements, and transition metal elements, optionally comprising one or more elements of Mg, Ti, V, Si, Cr, Mn, Fe, Co, Ni, and B; and
optionally, a molar ratio of a manganese element to iron element in the core is 1:9 to 9:1.

12. The positive electrode material according to claim 11, wherein a molar ratio of LiMnₓFe₁₋ₓPO₄ in the core to a carbon element in the coating layer is 1:1.5 to 1:0.001, optionally 1:1.45 to 1:0.01; and/or
a molar ratio of LiMnₓFe₁₋ₓPO₄ in the core to the doping element in the coating layer is 1:0.25 to 1:0.00001, optionally 1:0.2 to 1:0.0001.

13. The positive electrode material according to claim 11 or 12, wherein a particle size Dᵥ50 of the positive electrode material is 0.1 µm to 13 µm; and/or
a BET specific surface area of the positive electrode material is 10 m²/g to 27 m²/g, optionally 10 m²/g to 25 m²/g; and/or
a powder resistivity of the positive electrode material is less than or equal to 1200 Ω·cm, and optionally, the powder resistivity of the positive electrode material is less than or equal to 300 Ω·cm; and/or
the positive electrode material is prepared by the method according to any one of claims 1 to 10.

14. A positive electrode plate, comprising a positive electrode material prepared by the method according to any one of claims 1 to 10 or the positive electrode material according to any one of claims 11 to 13.

15. A battery, comprising a positive electrode material prepared by the method according to any one of claims 1 to 10, the positive electrode material according to any one of claims 11 to 13, or the positive electrode plate according to claim 14.

16. An electric apparatus, comprising the battery according to claim 15.
